# EUROPEAN PATENT SPECIFICATION

(11) **EP 2 067 516 B1**
(45) Date of publication and mention of the grant of the patent: **04.07.2012**
(21) Application number: 06810935.4
(22) Date of filing: 29.09.2006
(51) Int. Cl.: B01D 53/62, B01D 53/79

(54) **APPARATUS FOR RECOVERING CARBON DIOXIDE FROM EXHAUST GAS**
VORRICHTUNG ZUR RÜCKGEWINNUNG VON KOHLENDIOXID AUS ABGAS
APPAREIL DE RÉCUPÉRATION DE DIOXYDE DE CARBONE À PARTIR DE GAZ D'ÉCHAPPEMENT

(43) Date of publication of application: 10.06.2009
(73) Proprietor: National Institute of Advanced Industrial Science and Technology, Tokyo 100-8921 (JP); Mitsui Engineering and Shipbuilding Co, Ltd., Tokyo 104-8439 (JP)
(72) Inventor: YAMAMOTO, Yoshitaka, Tsukuba-shi Ibaraki 305-8569 (JP); KAWAMURA, Taro, Tsukuba-shi Ibaraki 305-8569 (JP); UCHIDA, Kazuo, Tokyo 104-8439 (JP); KANDA, Hajime, Tokyo 104-8439 (JP); TANAKA, Susumu, Chuo-ku Tokyo 1048439 (JP); TAKANO, Osamu, Akishima-shi Tokyo 196-0012 (JP)
(74) Representative: WSL Patentanwälte Partnerschaftsgesellschaft
(86) International application number: PCT/JP2006/319571
(87) International publication number: WO 2008/041299

(56) References cited:
- JP-A- 05 038 429
- JP-A- 08 012 314
- JP-A- 2000 024 454
- JP-A- 2000 146 388
- JP-A- 2004 059 630
- JP-A- 2005 132 664
- JP-A- 2006 111 773

## Description

### TECHNICAL FIELD

The present invention relates to a carbon dioxide separating and recovering apparatus that involves: contacting exhaust gas with particulate ice at a low temperature by use of cold energy of LNG (liquefied natural gas) to generate carbon dioxide hydrate; and then fixing carbon dioxide (CO₂) in the exhaust gas to the gas hydrate, thereby recovering the carbon dioxide from the exhaust gas.

### BACKGROUND ART

Recently, methods of recovering carbon dioxide (CO₂) included in exhaust gas are developed from the viewpoint of global environmental protection, etc. These methods include, for example, a chemical absorption method, a physical adsorption method, a membrane separation method, and the like.

A chemical absorption method is a method in which carbon dioxide is separated and recovered by making use of properties of an amine absorbing solution which absorbs carbon dioxide at 40 °C to 50 °C and releases carbon dioxide at 100 °C to 120 °C. The physical adsorption method is a method in which carbon dioxide is separated and recovered by making use of properties of zeolite that absorbs carbon dioxide when a pressure is applied and desorbs carbon dioxide when the pressure is reduced. Moreover, the membrane separation method is a method in which carbon dioxide is subjected to membrane-separation by use of a porous hollow fibger membrane.

However, the chemical absorption method or the physical adsorption method needs the reproduction of an absorbent and an adsorbent, and consume a large amount of energy as well. As such, it is not necessarily suitable as a method of separating carbon dioxide for fixing carbon dioxide.

On the other band, the membrane separation method is a separation method based on the molecular size. However, because the nitrogen molecule and the carbon dioxide molecule included in combustion exhaust gas have substantially the same size, the two kinds of molecules are difficult to separate by this method. Moreover, it is also said that the purity of the recovered carbon dioxide is low.

Moreover, a method of separating carbon dioxide with gas hydrate is proposed (e.g., Japanese patent application *Kokai* publication No. 2001-96133 and Japanese patent application *Kokai* publication No. Hei 5-38429).

However, the method of separating carbon dioxide with gas hydrate, in any case, has difficulty in generating gas hydrate including high-concentration carbon dioxide from exhaust gas with a small content of carbon dioxide such as gas turbine exhaust gas.

### DISCLOSURE OF THE INVENTION

Incidentally, the study on gas hydrates shows, for example, that carbon dioxide can be concentrated by approximately 60% to 80% in carbon dioxide hydrate generated at a low temperature of -70 °C to -100 °C. It is also ascertained in a bench-scale experiment.

This invention has been made on the basis of the research and experimental results. The present invention is directed to provide an apparatus therefor that consume a less amount of energy by improving gas hydrate formation reaction that generally shows an extremely low production rate at a low temperature and by effectively making use of unused cold energy wasted when LNG used as a fuel is gasified in gas-turbine combined cycle power facilities.

A method of recovering carbon dioxide from exhaust gas by gas-hydrating the carbon dioxide is described. The method includes the steps of: cooling the exhaust gas to a given temperature by use of cold energy of liquefied natural gas; spraying water in a minute-ice generator having been cooled to a given temperature by use of the cold energy of the liquefied natural gas to generate minute ice; and introducing the minute ice and the cooled exhaust gas into a gas hydrate generator so as to cause the minute ice and carbon dioxide in the exhaust gas to react with each other in the gas hydrate generator, thereby generating carbon dioxide hydrate.

According to this method of recovering carbon dioxide, it becomes possible to gas-hydrate minute ice including the core of the minute ice in a relatively short time by forming the minute ice (e.g., 0.1 µm to 10 µm) from ice that has been said to be difficult to be gas-hydrated at a low temperature of, for example, -70 °C to -100 °C. As a result, carbon dioxide can be recovered efficiently from exhaust gas, particularly, even from gas turbine exhaust gas having a low content of carbon dioxide (e.g., 3% to 4%).

In addition, according to this method, by recovering unused cold energy wasted when LNG is gasified and by effectively making use of the cold energy, it becomes possible to efficiently recover carbon dioxide hydrate with a method that allows less energy consumption than that with conventional methods.

In the method of separating and recovering carbon dioxide from exhaust gas, exhaust gas may be cooled to approximately -70 °C to -100 °C by use of the cold energy of the liquefied natural gas is caused to contact with minute ice having a particle diameter of approximately 0.1 µm to 10 µm to thereby generate carbon dioxide hydrate.

According to this method it becomes possible to efficiently recover carbon dioxide even from gas turbine exhaust gas that is said to have a low content of carbon dioxide.

In addition, according to this method, by recovering unused cold energy wasted when LNG is gasified and by effectively making use of the cold energy, it becomes possible to efficiently recover carbon dioxide hydrate with a method that allows less energy consumption than that with conventional methods.

On the other hand, an apparatus of recovering carbon dioxide from exhaust gas by gas-hydrating the carbon dioxide is described. The apparatus includes: a spray nozzle; a minute-ice generator which freezes particulate droplets of water sprayed from the spray nozzle by use of cold energy of liquefied natural gas to generate minute ice; and a gas hydrate generator into which the minute ice and exhaust gas cooled by use of the cold energy of the liquefied natural gas are introduced to generate carbon dioxide hydrate.

Thereby, it becomes possible to gas-hydrate minute ice including the core of the minute ice in a relatively short time by forming the minute ice from ice that has been said to be difficult to be gas-hydrated at a low temperature of, for example, -70 °C to -100 °C. As a result, carbon dioxide can be recovered efficiently from exhaust gas, particularly, even from gas turbine exhaust gas having approximately 3% to 4% content of carbon dioxide.

In addition, according to this apparatus, by recovering unused cold energy wasted when LNG is gasified and by effectively making use of the cold energy, it becomes possible to efficiently recover carbon dioxide hydrate with an apparatus that allows less energy consumption than that with conventional methods.

In the apparatus of recovering carbon dioxide from exhaust gas, the exhaust gas in the gas hydrate generator may be circulated between the gas hydrate generator and a circulating-gas cooler outside the gas hydrate generator, and that the exhaust gas is cooled by the circulating-gas cooler which makes use of the cold energy of the liquefied natural gas.

Thereby, it becomes possible to keep the inside of the gas hydrate generator at a given temperature, and to promote the generation of gas hydrate in the gas hydrate generator.

In the apparatus of recovering carbon dioxide in exhaust gas reaction heat generated in the gas hydrate generator may be removed by using the exhaust gas cooled by use of the cold energy of the liquefied natural gas.

Thereby, it becomes possible to improve the reaction between carbon dioxide in exhaust gas and minute and to efficiently generate carbon dioxide hydrate.

To achieve the above object, the present invention is constituted as follows. The invention according to claim 1 is an apparatus of recovering carbon dioxide from exhaust gas. The apparatus includes: an exhaust gas precooler which precools exhaust gas by using low temperature-low pressure exhaust gas that has been depressurized to near an atmospheric pressure after carbon dioxide separation and recovery; an exhaust gas compressor which pressurizes the low temperature exhaust gas precooled by the exhaust gas precooler to a pressure necessary for gas hydrate generation; an exhaust gas recooler which recools the exhaust gas compressed by the exhaust gas compressor by use of low temperature-high pressure exhaust gas after the carbon dioxide separation and recovery; an exhaust gas expander which expands the high pressure exhaust gas up to an atmospheric pressure, the exhaust gas having been subjected to a rise in temperature by the exhaust gas recooler; and a gas hydrate generating device. The gas hydrate generating device includes: a generation water pump which pressurizes generation water up to a pressure necessary for reaction; an assist gas compressor which pressurizes part of the exhaust gas up to an assist gas pressure necessary for spraying of the generation water; a spray nozzle which atomizes the generation water introduced therein together with assist gas; a minute-ice generator which generated minute ice by freezing the droplets of water atomized by the spray nozzle by use of cold energy of liquefied natural gas; a gas hydrate generator made up of multiple reaction vessels which are connected to each other meanderingly, and in which the minute ice and exhaust gas cooled by use of the cold energy of the liquefied natural gas are introduced; an exhaust gas circulation loop which substantially circularly connects the reaction vessels to each other through communication tubes; and a circulating-gas cooler which cools the exhaust gas circulating in the multiple reaction vessels with the liquefied natural gas.

According to this invention, it becomes possible to gas-hydrate minute ice including the core of the minute ice in a relatively short time by forming the minute ice from ice that has been said to be difficult to be gas-hydrated at a low temperature of, for example, -70 °C to -100 °C. As a result, carbon dioxide can be recovered efficiently from exhaust gas, particularly, even from gas turbine exhaust gas having approximately 3% to 4% content of carbon dioxide.

In addition, according to this apparatus, by recovering unused cold energy wasted when LNG is gasified and by effectively making use of the cold energy, it becomes possible to efficiently recover carbon dioxide hydrate with novel means that allows less energy consumption than that with conventional methods.

### BRIEF DESCRIPTION OF THE DRAWINGS

[Fig. 1] Fig. 1 is a system flow chart of a method of separating and recovering carbon dioxide according to the present invention.

[Fig. 2] Fig. 2 is a block diagram of an apparatus of separating and recovering carbon dioxide according to the present invention.

### BEST MODES FOR CARRYING OUT THE INVENTION

Hereafter, an embodiment of the present invention will be described with reference to the drawings.
In addition, in this embodiment, a gas-turbine combined cycle power plant is shown as an example of an exhaust gas source origin; however, the exhaust gas source origin is not limited to this example.

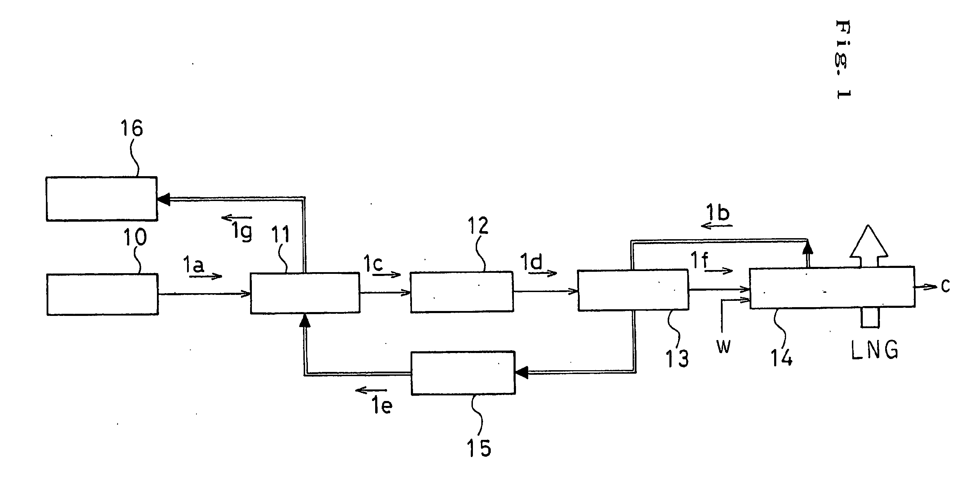

As shown in Fig. 1, a facility that carries out a method of separating and recovering carbon dioxide according to the present invention primarily includes a gas-turbine combined cycle power plant 10, an exhaust gas precooler 11, an exhaust gas compressor 12, an exhaust gas recooler 13, a carbon dioxide hydrate generating device (also called, "carbon dioxide separation and recovery device") 14 and an exhaust gas expander 15.

In addition, in Fig. 1, the arrow of a single line shows the flow of exhaust gas before carbon dioxide separation and recovery, and the arrow of double lines shows the flow of exhaust gas after carbon dioxide separation and recovery.

Exhaust gas 1a (carbon dioxide content: 3% to 4%, temperature: approximately 100 °C, and pressure: approximately 0.1 MPa) discharged from the gas-turbine combined cycle power plant 10 is precooled to a given temperature by the exhaust gas precooler 11. For the precooling of this exhaust gas 1a, low temperature-low pressure exhaust gas le after carbon dioxide separation and recovery is used. The pressure of the exhaust gas 1e has been reduced to near the atmospheric pressure (e.g., 0.1 MPa) by the exhaust gas expander 15 after discharged from the carbon dioxide hydrate generating device 14.

Low temperature-low pressure exhaust gas 1c after precooled by the exhaust gas precooler 11 is pressurized by the exhaust gas compressor 12 to a pressure (e.g., 2 MPa) necessary for gas hydrate generation. Exhaust gas 1d pressurized by the exhaust gas compressor 12 is introduced into the exhaust gas recooler 13, and then recooled with high pressure-low temperature (e.g., 2 MPa and approximately -70 °C) exhaust gas 1b that is discharged from the carbon dioxide hydrate generating device 14 after carbon dioxide separation and recovery.

High pressure-low temperature (e.g., 2 MPa and -70 °C) exhaust gas 1f recooled by the exhaust gas recooler 13 reacts with minute ice generated by utilization of cold energy of LNG and becomes carbon dioxide hydrate c. Reference symbol w indicates generation water for minute ice manufacturing.

As a result, carbon dioxide in the exhaust gas is incorporated into the carbon dioxide hydrate c by 60% to 80% relative to the carbon dioxide hydrate c. Therefore, the concentration of carbon dioxide in exhaust gas 1g discharged from a chimney 16 is decreased by the amount. The exhaust gas 1g after carbon dioxide separation and recovery is subjected to a rise in temperature in the exhaust gas recooler 15 and is emitted to the atmosphere through the chimney 16.

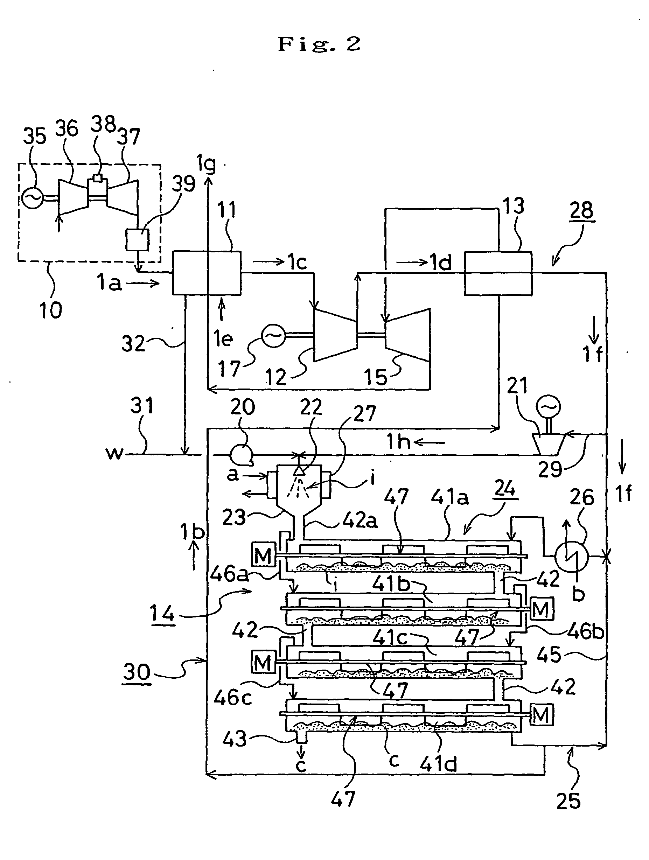

Next, the carbon dioxide separation and recovery device according to the present invention will be described with reference to Fig. 2.
This carbon dioxide separation and recovery device includes the gas-turbine combined cycle power plant 10, the exhaust gas precooler 11, the exhaust gas compressor 12, the exhaust gas recooler 13, the carbon dioxide hydrate generating device 14 and the exhaust gas expander 15.

Additionally, the carbon dioxide hydrate generating device 14 includes a generation water pump 20, an assist gas compressor 21, a two-fluid spray nozzle 22, a minute-ice generator 23, a gas hydrate generator 24, an exhaust gas circulation loop 25, and a circulating-gas cooler 26 that utilizes cold energy of LNG.

On the other hand, an exhaust gas supply pipe 28 is connected to the exhaust gas circulation loop 25 through the exhaust gas precooler 11, the exhaust gas compressor 12 and the exhaust gas recooler 13. The exhaust gas supply pipe 28 supplies the carbon dioxide hydrate generating device 14 with the exhaust gas 1a discharged from the gas-turbine combined cycle power plant 10.

In addition, a branch pipe 29 branched from the exhaust gas supply pipe 28 reaches the two-fluid spray nozzle 22 in the minute-ice generator 23 through the assist gas compressor 21. Moreover, an exhaust gas discharge pipe 30 that is connected to the exhaust gas circulation loop 25 is connected to an unillustrated chimney through the exhaust gas recooler 13, the exhaust gas expander 15 and the exhaust gas precooler 11.

Additionally, a water supply pipe 31 is connected to the two-fluid spray nozzle 22 in the minute-ice generator 23. In addition, a water recovery pipe 32 that recovers water generated in the exhaust gas precooler 11 is connected to the water supply pipe 31.

Moreover, the gas-turbine combined cycle power plant 10 comprises an electrical generator 35, a suction compressor 36, an exhaust gas expander 37, a combustor 38 and a waste-heat boiler 39. In addition, the electrical generator 35 is driven by the exhaust gas expander 37, and thereby electricity is generated by the electrical generator 17.

Exhaust gas discharged from the exhaust gas expander 37 in the gas-turbine combined cycle power plant 10 becomes the low temperature-normal pressure (e.g., 373 K (100 °C) and 0.1 MPa) exhaust gas 1a after thermal recovery by the waste-heat boiler 39, and is supplied to the exhaust gas precooler 11.

The exhaust gas 1a supplied to this exhaust gas precooler 11 is precooled by using the low temperature-low pressure exhaust gas 1e that has been subjected to carbon dioxide separation and recovery. This exhaust gas 1e is a low temperature-low pressure gas discharged from the carbon dioxide hydrate generating device 14, and depressurized down to near the atmospheric pressure (e.g., 0.1 MPa) by the exhaust gas expander 15.

The low temperature exhaust gas 1c precooled (for example, -40 °C to -50 °C) by the exhaust gas precooler 11 is pressurized using the exhaust gas compressor 12 to a pressure (e.g., 2 MPa) necessary for the generation of gas hydrate.

The exhaust gas 1d compressed by the exhaust gas compressor 12 is introduced into the exhaust gas recooler 13, and then recooled with low temperature-high pressure (e.g. , 203 K (-70 °C), 2 MPa) exhaust gas 1b that is discharged from the carbon dioxide hydrate generating device 14 described below after carbon dioxide separation and recovery.

After the low temperature-high pressure exhaust gas 1b recools the exhaust gas 1d pressurized by the exhaust gas compressor 12, the exhaust gas 1b is emitted to the atmosphere from an unillustrated chimney via the exhaust gas expander 15. The pressure of the gas 1g emitted at this point is approximately, for example, 0.1 MPa.

In addition, in the present invention, the exhaust gas compressor 12 and the electrical generator 17 are driven by the exhaust gas expander 15, and electricity is generated by the electrical generator 17.

The carbon dioxide hydrate generating device 14, as already described, includes the generation water pump 20, the assist gas compressor 21, the two-fluid spray nozzle 22, the minute-ice generator 23, the gas hydrate generator 24, the exhaust gas circulation loop 25 and the circulating-gas cooler 26.

The generation water w for carbon dioxide hydrate generation is pressurized by the generation water pump 20 up to a pressure necessary for reaction. On the other hand, part of the exhaust gas 1f recooled by the exhaust gas recooler 13 is pressurized by the assist gas compressor 21 up to an assist gas pressure (e.g., 2.3 MPa) necessary for spraying of the generation water w.

The minute-ice generator 23 includes the two-fluid spray nozzle 22. This two-fluid spray nozzle 22 sprays the generation water w in a particulate form from a nozzle hole (unillustrated) with the valve opened by the introduction of assist gas 1h.

In addition, this minute-ice generator 23 has a cooling jacket 27 on its outside, and instantaneously freezes the particulate water sprayed from the spray nozzle 22 by use of cold energy of LNG (liquefied natural gas) to generate minute ice (e.g., 0.1 µm to 10 µm) i.

Here, when the particle diameter of the minute ice i exceeds 10 micrometers, it takes a longer period of time to gas-hydrate the minute ice i including the core of the minute ice, so that the use of the minute ice i having such a particle diameter should be avoided in the industrial viewpoint. Additionally, the cooling jacket 27 uses, as a coolant, a coolant a cooled to a given temperature by utilization of the cold energy of LNG.

The gas hydrate generator 24 is made up of multiple reaction vessels 41a to 41d that are arranged meanderingly. These reaction vessels 41a to 41d seem to be arranged in parallel at a glance, but they are connected substantially in series.

Specifically, the left end part (upstream end) of the reaction vessel 41a on the top row is connected to the outlet of the minute-ice generator 23 through a communication tube 42a. The right end part (downstream end) of the reaction vessel 41a on the top row communicates with the right end part (upstream end) of the reaction vessel 41b on the second row through a communication tube 42. Moreover, the left end part (downstream end) of the reaction vessel 41b on the second row communicates with the left end part (upstream end) of the reaction vessel 41c on the third row through a communication tube 42. In addition, the right end part (downstream end) of the reaction vessel 41c on the third row communicates with the right end part (upstream end) of the reaction vessel 41d on the fourth row (lowest row) through a communication tube 42. Additionally, the reaction vessel 41d on the lowest row includes a discharge pipe 43 on its left end part (downstream end).

On the other hand, the exhaust gas circulation loop 25 makes the exhaust gas 1f circulate along the multiple reaction vessels 41a to 41d described above. One end of a piping 45 for circulation loop formation is connected to the left end part of the reaction vessel 41a on the top row, and the other end is connected to the right end part of the reaction vessel 41d on the lowest row. In addition, the reaction vessel 41a on the top row and the reaction vessel 41b on the second row communicate with each other on their left end parts through a communication tube 46a. The reaction vessel 41b on the second row and the reaction vessel 41c on the third row communicate with each other on their right end parts through a communication tube 46b. The reaction vessel 41c on the third row and the reaction vessel 41d on the lowest row communicate with each other on their left end parts through a communication tube 46c.

The reaction vessels 41a to 41d each include a stirrer 47 to stir the minute ice i in the reaction vessels 41a to 41d to promote the reaction of the minute ice i with the exhaust gas 1f.

In addition, the exhaust gas 1a (carbon dioxide content: 3% to 4%, temperature: 100 °C, and pressure: 0.1 MPa) discharged from the gas-turbine combined cycle power plant 10 is introduced into the exhaust gas precooler 11, and then precooled in the exhaust gas precooler 11 by use of the low temperature-low pressure (e.g., 0.1 MPa) exhaust gas 1e.

The low temperature-low pressure exhaust gas 1c (for example, -40°C to -50 °C, 0.1 MPa) after precooled by the exhaust gas precooler 11 is pressurized using the exhaust gas compressor 12 to a pressure (e.g., 2 MPa) necessary for the generation of gas hydrate. The exhaust gas 1d pressurized by the exhaust gas compressor 12 is supplied to the exhaust gas recooler 13, and recooled in the exhaust gas recooler 13 with the low temperature-high pressure (e.g., -70 °C, 2 MPa) exhaust gas 1b that is discharged from the exhaust gas hydrate generating device 14 after carbon dioxide separation and recovery.

Part of the low temperature-high pressure (e.g., -70 °C, 2 MPa) exhaust gas 1f recooled in the exhaust gas recooler 13 is pressurized to a given pressure (e.g., 2.3 MPa) by the assist gas compressor 21.

When this assist gas 1f is supplied to the two-fluid spray nozzle 22, the valve or vent incorporated in the two-fluid spray nozzle 22 is opened as already described. Then, the generation water w pressurized by the generation water pump 20 is sprayed in a particulate form within the minute-ice generator 23. This minute particulate water is instantaneously frozen to become the minute ice i because the inside of the minute-ice generator 23 is cooled to a given temperature (e.g., -30 °C to -50 °C) by the cooling jacket 27.

This minute ice i is supplied to the upstream end of the reaction vessel 41a on the top row of the exhaust gas hydrate generator 24, and then transported to the downstream end while being stirred by the stirrer 47. On the other hand, the high pressure (e.g., 2 MPa) exhaust gas 1f supplied to the piping 45 for loop formation from the exhaust gas supply pipe 28 is cooled to a given temperature (e.g., 203 K (-70 °C) to 173 K (-100 °C)) by the circulating-gas cooler 26 that makes use of the cold energy of LNG (b). Then, the exhaust gas 1f is supplied to the downstream end of the reaction vessel 41a on the top row.

The minute ice i is transported toward the reaction vessel 41d on the lowest row from the reaction vessel 41a on the top row one after another. The minute ice i is to be discharged, in the end, from the discharge pipe 43 disposed in the reaction vessel 41d on the lowest row to the outside of the system. However, while passing through the multiple reaction vessels 41a to 41d in a zigzag manner, the ice reacts with carbon dioxide included in the exhaust gas 1f to become carbon dioxide hydrate c.

As a result, the carbon dioxide in the exhaust gas is incorporated into this carbon dioxide hydrate c by 60% to 80% relative to the carbon dioxide hydrate c. As such, the concentration of the carbon dioxide in the exhaust gas discharged from the chimney 16 is lowered by the amount. Moreover, the reaction heat generated when the carbon dioxide in the exhaust gas reacts with the minute ice i is removed by the cold energy of the exhaust gas 1f.

On the other hand, while the exhaust gas 1f circulates according to the pathway of the exhaust gas circulation loop 25, part of the exhaust gas 1f is emitted to the atmosphere via the exhaust gas discharge pipe 30 described above.

The invention can be applied not only to gas-turbine combined cycle power plants, but also widely to facilities that discharge carbon dioxide such as incinerators.

## Claims

1. An apparatus of recovering carbon dioxide from exhaust gas, the apparatus comprising:
an exhaust gas precooler (11) which precools exhaust gas by using low temperature-low pressure exhaust gas that has been depressurized to near an atmospheric pressure after carbon dioxide separation and recovery;
an exhaust gas compressor (12) which pressurizes the low temperature exhaust gas precooled by the exhaust gas precooler (11) to a pressure necessary for gas hydrate generation;
an exhaust gas recooler (13) which recools the exhaust gas compressed by the exhaust gas compressor (12) by use of low temperature-high pressure exhaust gas after the carbon dioxide separation and recovery;
an exhaust gas expander (15) which expands the high pressure exhaust gas up to an atmospheric pressure, the exhaust gas having been subjected to a rise in temperature by the exhaust gas recooler (13); and
a gas hydrate generating device (14),
wherein the gas hydrate generating device (14) includes:
a generation water pump (20) which pressurizes generation water up to a pressure necessary for reaction;
an assist gas compressor (21) which pressurizes part of the exhaust gas up to an assist gas pressure necessary for spraying of the generation water;
a spray nozzle (22) which atomizes the generation water introduced therein together with assist gas;
a minute-ice generator (23) which generates minute ice by freezing the droplets of water atomized by the spray nozzle (22) by use of cold energy of liquefied natural gas;
a gas hydrate generator (24) made up of a plurality of reaction vessels (41) which are connected to each other meanderingly, and in which the minute ice and exhaust gas cooled by use of the cold energy of the liquefied natural gas are introduced;
an exhaust gas circulation loop (25) which substantially circularly connects the reaction vessels (41) to each other through communication tubes (42); and
a circulating-gas cooler (26) which cools the exhaust gas circulating in the plurality of reaction vessels (41) with the liquefied natural gas.

## Patentansprüche

1. Vorrichtung zur Gewinnung von Kohlenstoffdioxid aus Abgas, wobei die Vorrichtung folgendes umfasst:
einen Abgas-Vorkühler (11), der Abgas unter Verwendung von Abgas mit geringer Temperatur und geringem Druck, das nach Kohlenstoffdioxidtrennung und -gewinnung bis zu annähernd atmosphärischem Druck drucklos gemacht wurde, vorkühlt,
einen Abgas-Kompressor (12), der das durch den Abgas-Vorkühler (11) vorgekühlte Abgas mit niedriger Temperatur mit Druck beaufschlagt, bis zu einem Druck, der für Gashydraterzeugung notwendig ist,
einen Abgas-Nachkühler (13), der durch den Abgas-Kompressor (12) komprimiertes Abgas unter Verwendung von Abgas mit geringer Temperatur und hohem Druck nach der Kohlenstoffdioxidtrennung und -gewinnung wieder kühlt,
einen Abgas-Expander (15) der das Abgas mit hohem Druck bis zu einem atmosphärischen Druck entspannt, wobei das Abgas durch den Abgas-Nachkühler (13) einem Temperaturanstieg ausgesetzt worden war, und
eine Einrichtung zur Gashydraterzeugung (14),
wobei die Einrichtung zur Gashydraterzeugung (14) umfasst:
eine Pumpe für Generierungswasser (20), die Generierungswasser bis zu einem für eine Reaktion notwendigen Druck mit Druck beaufschlagt,
einen Hilfsgas-Kompressor (21), der einen Teil des Abgases bis zu einem Hilfsgas-Druck, der zum Versprühen des Generierungswassers notwendig ist, mit Druck beaufschlagt,
eine Sprühdüse (22), die darin eingebrachtes Generierungswasser zusammen mit Hilfsgas versprüht,
einen Generator für winzige Eiskristalle (23), der winzige Eiskristalle durch Frieren von durch die Sprühdüse (22) versprühte Tropfen von Wasser unter Verwendung von Kälteenergie von verflüssigtem Erdgas erzeugt,
einen Gashydrat-Generator (24), der eine Vielzahl von Reaktionsgefäßen (41) umfasst, die mäandrierend miteinander verbunden sind und in die die unter Verwendung der Kälteenergie des verflüssigten Erdgases gekühlten winzigen Eiskristalle und Abgas eingebracht werden,
ein Abgas-Kreislaufsystem (25), das die Reaktionsgefäße (41) durch Verbindungsröhren (42) im Wesentlichen zirkulär miteinander verbindet, und
einen Kühler für zirkulierendes Gas (26), der in der Vielzahl von Reaktionsgefäßen (41) zirkulierendes Abgas mit dem verflüssigtem Erdgas kühlt.

## Revendications

1. Un appareil de récupération de dioxyde de carbone à partir de gaz d'échappement, l'appareil comprenant :
un pré-refroidisseur de gaz d'échappement (11) qui pré-refroidit le gaz d'échappement en utilisant un gaz d'échappement basse température - basse pression qui a été dépressurisé jusqu'à avoisiner une pression atmosphérique après la séparation et la récupération de dioxyde de carbone ;
un compresseur de gaz d'échappement (12) qui pressurise le gaz d'échappement basse température pré-refroidi par le pré-refroidisseur de gaz d'échappement (11) jusqu'à une pression nécessaire pour la génération d'hydrate de gaz ;
un re-refroidisseur de gaz d'échappement (13) qui re-refroidit le gaz d'échappement comprimé par le compresseur de gaz d'échappement (12) à l'aide d'un gaz d'échappement basse température - haute pression après la séparation et la récupération du dioxyde de carbone ;
un détendeur de gaz d'échappement (15) qui détend le gaz d'échappement haute pression jusqu'à une pression atmosphérique, le gaz d'échappement ayant été soumis à une élévation de température par le re-refroidisseur de gaz d'échappement (13) ; et
un dispositif de génération d'hydrate de gaz (14),
dans lequel le dispositif de génération d'hydrate de gaz (14) inclut :
une pompe à eau de génération (20) qui pressurise de l'eau de génération jusqu'à une pression nécessaire pour la réaction ;
un compresseur de gaz d'assistance (21) qui pressurise une partie du gaz d'échappement jusqu'à une pression de gaz d'assistance nécessaire pour la pulvérisation de l'eau de génération ;
une buse de pulvérisation (22) qui atomise l'eau de génération introduite dedans conjointement avec le gaz d'assistance ;
un générateur de glace très fine (23) qui génère de la glace très fine en gelant les gouttelettes d'eau atomisées par la buse de pulvérisation (22) à l'aide de l'énergie froide d'un gaz naturel liquéfié ;
un générateur d'hydrate de gaz (24) composé d'une pluralité de cuves de réaction (41) qui sont raccordées les unes aux autres en lacet, et dans lesquelles la glace très fine et le gaz d'échappement refroidi à l'aide de l'énergie froide du gaz naturel liquéfié sont introduits ;
une boucle de circulation de gaz d'échappement (25) qui raccorde de manière substantiellement circulaire les cuves de réaction (41) les unes aux autres par l'intermédiaire de tubes de communication (42) ; et
un refroidisseur de gaz en circulation (26) qui refroidit le gaz d'échappement en circulation dans la pluralité de cuves de réaction (41) avec le gaz naturel liquéfié.
